(19) Europäisches Patentamt
European Patent Office
Office européen des brevets

(11) **EP 4 763 505 A1**

(12) **EUROPEAN PATENT APPLICATION**
published in accordance with Art. 153(4) EPC

(43) Date of publication:
**24.06.2026 Bulletin 2026/26**

(21) Application number: **25783157.8**

(22) Date of filing: **03.04.2025**

(51) International Patent Classification (IPC):
**B30B 15/26** (2006.01)  **B30B 3/04** (2006.01)
**B30B 11/20** (2006.01)  **B21B 38/10** (2006.01)
**H01M 4/04** (2006.01)

(52) Cooperative Patent Classification (CPC):
**B21B 38/10; B30B 3/04; B30B 11/20; B30B 15/26;
H01M 4/04**

(86) International application number:
**PCT/KR2025/004447**

(87) International publication number:
**WO 2025/211798 (09.10.2025 Gazette 2025/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **05.04.2024 KR 20240046633**

(71) Applicant: **LG Energy Solution, Ltd.
Seoul 07335 (KR)**

(72) Inventors:
• **LIM, Dong Hun
  Daejeon 34122 (KR)**
• **HWANG, Koo Youn
  Daejeon 34122 (KR)**
• **CHA, Myeong Geun
  Daejeon 34122 (KR)**
• **JEONG, Yun Hyeock
  Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **ROLLER GAP MEASURING DEVICE**

(57) The present disclosure relates to a roller gap measuring device for measuring a gap between a pair of rollers, and the roller gap measuring device includes a gap measurement sensor unit that measures the gap between the pair of rollers, wherein the pair of rollers each includes a rotating shaft extending laterally; and a bearing unit mounted on the rotating shaft, wherein the bearing unit includes a bearing mounted on an outer surface of the rotating shaft; and a bearing housing accommodating the bearing, wherein the gap measurement sensor unit is positioned in the bearing housing and measures a distance between the rotating shaft and the gap measurement sensor unit to measure the gap between the pair of rollers.

FIG.2

## Description

## TECHNICAL FIELD

### CROSS-REFERENCE TO RELATED APPLICATIONS

The present application is based on and claims priority from Korean Patent Application No. 10-2024-0046633, filed on April 5, 2024, with the Korean Intellectual Property Office, the disclosure of which is incorporated herein in its entirety by reference.

### TECHNICAL FIELD

The present disclosure relates to a roller gap measuring device.

## BACKGROUND ART

Secondary batteries have been applied to small-sized applications such as mobile devices or laptop computers, but recently, the research direction has been expanded to medium and large-sized applications, and they are widely used in applications requiring high voltage and large capacity in relation to energy storage systems (ESSs) or electric vehicles (EVs).

Such secondary batteries may be manufactured in a form in which an electrode assembly where electrodes and separators are alternately stacked is accommodated in a case or housing. At this time, the electrodes may have a form in which an electrode sheet coated with an electrode active material or the like is cut to a predetermined size or shape.

Such an electrode sheet is subjected to, for example, at least one pressing process. In general, the pressing of the electrode sheet is performed by pressing rollers. At this time, the gap between the pressing rollers may be used as basic data for controlling the operation of the pressing rollers. The gap may mean the narrowest gap (or space) formed between a pair of pressing rollers, and if the gap is excessively large, the electrode sheet may not be sufficiently pressed. This may cause various problems, such as the pressed electrode sheet not being manufactured uniformly or having defects. Here, the surface of the rollers in contact with the electrode sheet is worn out as the pressing rollers are used, and if the diameter is reduced due to wear or a part thereof is damaged to form a groove or the like, there is a problem that some or all of the contacting parts of the electrode sheet passing between a plurality of pressing rollers are not pressed.

Conventionally, when the substrate was fed into two main rolls and pressed, there was a problem that the gap between the rolls was wider than the set gap.

This is because there is a clearance between the rolls and the bearing, and the gap between the rolls is widened as much as the clearance.

Therefore, it has become an important technology to measure how much the gap is widened. However, the current method of measuring the actual gap is to touch it directly with the LVDT sensor, but the accuracy is considerably low.

## SUMMARY

### TECHNICAL PROBLEM

One aspect of the present disclosure is to provide a roller gap measuring device capable of accurately measuring the gap between a pair of rollers.

### TECHNICAL SOLUTION

A roller gap measuring device according to an embodiment of the present disclosure measures a gap between a pair of rollers, and the roller gap measuring device includes a gap measurement sensor unit that measures the gap between the pair of rollers, wherein the pair of rollers each includes a rotating shaft extending in one direction; and a bearing unit mounted on the rotating shaft, wherein the bearing unit includes a bearing mounted on an outer surface of the rotating shaft; and a bearing housing accommodating the bearing, wherein the gap measurement sensor unit is positioned in the bearing housing and measures a distance between the rotating shaft and the gap measurement sensor unit to measure the gap between the pair of rollers.

### ADVANTAGEOUS EFFECTS

According to the present disclosure, by positioning the gap measurement sensor unit in the bearing housing of the bearing unit on which the rotating shaft of the pair of rollers is mounted and measuring the distance between the rotating shaft and the gap measurement sensor unit, the actual gap between the pair of rollers may be measured accurately.

Additionally, by further positioning the roller distance measurement sensor unit between the ends of the pair of rollers and measuring the gap between the pair of rollers, the actual gap between the pair of rollers may be measured significantly accurately.

### BRIEF DESCRIPTION OF THE DRAWINGS

FIG. 1 is a perspective view showing a roller gap measuring device in use according to an embodiment of the present disclosure.

FIG. 2 is a cross-sectional view showing a roller gap measuring device in use according to an embodiment of the present disclosure.

FIG. 3 is a cross-sectional view showing a gap measurement sensor unit in a roller gap measuring device according to an embodiment of the present disclosure.

FIG. 4 is an enlarged cross-sectional view of area A in FIG. 3.

FIG. 5 is a perspective view showing a sensor ring of a gap measurement sensor unit in a roller gap measuring device according to an embodiment of the present disclosure.

FIG. 6 is an enlarged cross-sectional view of area B in FIG. 2.

FIG. 7 is a plan view showing a roller distance measurement sensor unit in a roller gap measuring device according to an embodiment of the present disclosure.

## DETAILED DESCRIPTION

The objectives, specific advantages, and novel features of the present disclosure will become more apparent from the following detailed description and preferred embodiments in connection with the accompanying drawings. It should be noted that in affixing the reference numerals to the elements in each drawing in this specification, the identical reference numerals are affixed to the identical elements as much as possible even if they are shown in different drawings. Additionally, the present disclosure may be embodied in many different forms and is not limited to the embodiments described herein. And, in describing the present disclosure, detailed descriptions of related known technologies that may unnecessarily obscure the gist of the present disclosure will be omitted.

### Roller gap measuring device according to embodiment of the present disclosure

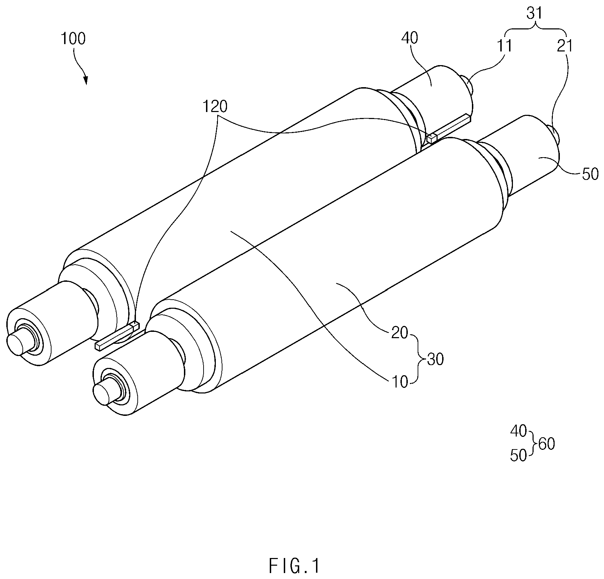

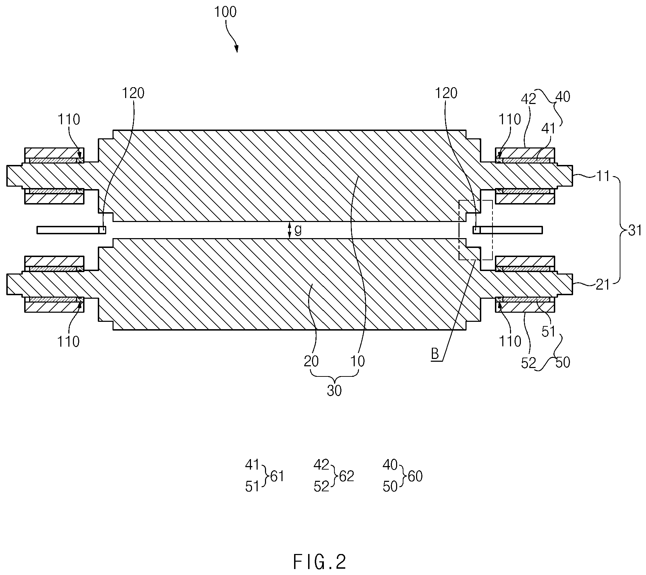

FIG. 1 is a perspective view showing a roller gap measuring device in use according to an embodiment of the present disclosure, and FIG. 2 is a cross-sectional view showing a roller gap measuring device in use according to an embodiment of the present disclosure.

Referring to FIGS. 1 and 2, a roller gap measuring device 100 according to an embodiment of the present disclosure measures a gap (g) between a pair of rollers 30, and the roller gap measuring device 100 includes a gap measurement sensor unit 110 that measures the gap (g) between the pair of rollers 30, wherein the pair of rollers 30 each includes a rotating shaft 31 extending in one direction; and a bearing unit 60 mounted on the rotating shaft 31, wherein the bearing unit 60 includes a bearing 61 mounted on an outer surface of the rotating shaft 31; and a bearing housing 62 accommodating the bearing 61. Additionally, the roller gap measuring device 100 according to an embodiment of the present disclosure may further include a roller distance measurement sensor unit 120.

More specifically, the roller gap measuring device 100 according to an embodiment of the present disclosure may measure a gap (g) between a pair of rollers 30 in contact with a material sheet.

The material sheet may be configured as a sheet-shaped electrode.

The roller 30 may extend in the longitudinal direction in a cylindrical shape. Here, the roller 30 may be made of a metal material. At this time, the roller 30 may be configured as a calendar roll. And, the roller 30 has a rotating shaft 31 extending in a direction of the central axis, so that the rotating shaft 31 rotates and the roller 30 may rotate.

The pair of rollers 30 may each include a rotating shaft 31 extending in one direction and a bearing unit 60 mounted on the rotating shaft 31.

The bearing unit 60 may include a bearing 61 mounted on an outer surface of the rotating shaft 31 and a bearing housing 62 accommodating the bearing 61.

Additionally, the pair of rollers 30 may include a first roller 10 and a second roller 20.

The first roller 10 may include a first rotating shaft 11 extending in one direction and a first bearing unit 40 mounted on the first rotating shaft 11.

The second roller 20 may include a second rotating shaft 21 extending in one direction and a second bearing unit 50 mounted on the second rotating shaft 21.

The first bearing unit 40 may include a first bearing 41 mounted on the outer surface of the first rotating shaft 11 and a first bearing housing 42 accommodating the first bearing 41.

The second bearing unit 50 may include a second bearing 51 mounted on the outer surface of the second rotating shaft 21 and a second bearing housing 52 accommodating the second bearing 51.

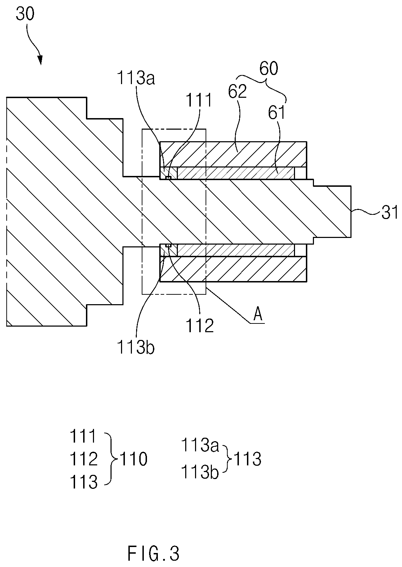

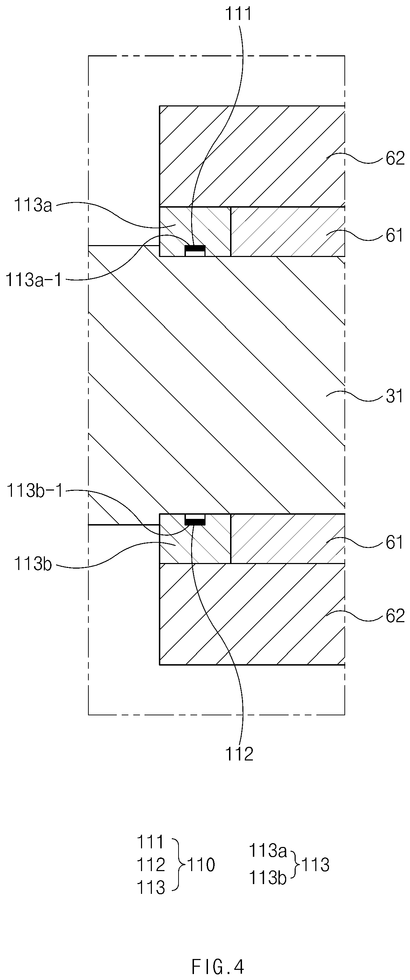

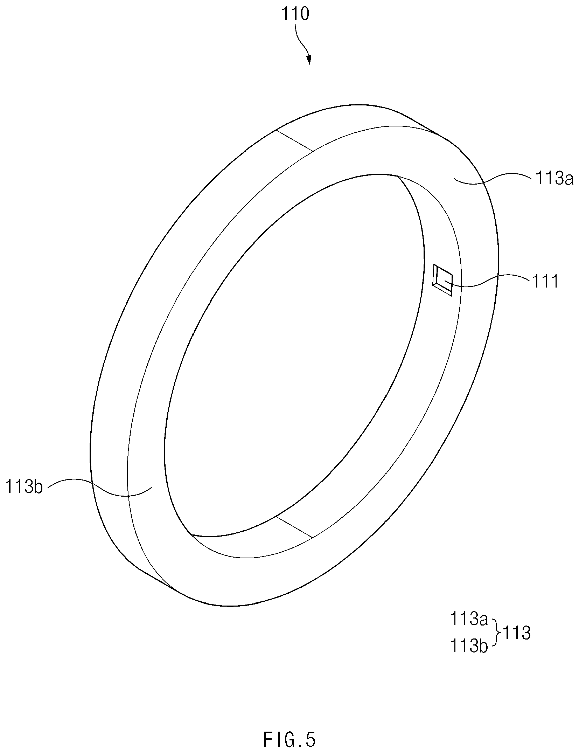

FIG. 3 is a cross-sectional view showing a gap measurement sensor unit in a roller gap measuring device according to an embodiment of the present disclosure, FIG. 4 is an enlarged cross-sectional view of area A in FIG. 3, and FIG. 5 is a perspective view showing a sensor ring of a gap measurement sensor unit in a roller gap measuring device according to an embodiment of the present disclosure.

Referring to FIGS. 2 to 5, the gap measurement sensor unit 110 measures the gap (g) between the pair of rollers 30.

The gap measurement sensor unit 110 is positioned in the bearing housing 62 and measures the gap (g) between the pair of rollers 30 by measuring a distance between the rotating shaft 31 and the gap measurement sensor unit 110.

The gap measurement sensor unit 110 may be positioned inside the first bearing housing 42 and the second bearing housing 52, respectively.

The gap measurement sensor unit 110 may include a first measurement sensor 111 and a second measurement sensor 112 positioned on both sides of the inside of the bearing housing 62. Accordingly, the gap (g) between the pair of rollers 30 may be measured by measuring the distance of the first measurement sensor 111 and the second measurement sensor 112 from the rotating shaft 31 of the pair of rollers 30, respectively.

The gap measurement sensor unit 110 may further include a sensor ring 113 on which the first measurement sensor 111 and the second measurement sensor 112 are positioned. At this time, the sensor ring 113 may be positioned between the rotating shaft 31 and the bearing housing 62.

An outer circumferential surface of the sensor ring 113 may be attached to an inner circumferential surface of the bearing housing 62.

The sensor ring 113 may be formed in a circular shape, and the first measurement sensor 111 and the second measurement sensor 112 may be positioned on inner circumferential surfaces of both sides 113a, 113b thereof. That is, the sensor ring 113 may be formed in a circular shape, and the first measurement sensor 111 and the second measurement sensor 112 may be positioned on the inner circumferential surfaces of one side 113a and the other side 113b of the sensor ring 113, respectively.

In the sensor ring 113, a first receiving groove 113a-1 in which the first measurement sensor 111 is positioned and a second receiving groove 113b-2 in which the second measurement sensor 112 is positioned may be formed on the inner circumferential surfaces thereof. Here, the first receiving groove 113a-1 and the second receiving groove 113b-2 may be open toward the rotating shaft 31.

The first measurement sensor 111 and the second measurement sensor 112 may be spaced apart from the rotating shaft 31 by a predetermined distance to measure the distance in a non-contact manner.

Additionally, the first measurement sensor 111 and the second measurement sensor 112 may be arranged in a direction parallel to the arrangement direction of the pair of rollers 30. That is, for example, referring to FIG. 2, the first measurement sensor 111 and the second measurement sensor 112 may be arranged in the vertical direction, which is the arrangement direction of the pair of rollers 30. However, in the roller gap measuring device 100 according to an embodiment of the present disclosure, the first measurement sensor 111 and the second measurement sensor 112 are not necessarily limited to being attached to the sensor ring 113, and as another example, they may be attached to the inner wall of the bearing housing 62 without the sensor ring 113.

And, the first measurement sensor 111 and the second measurement sensor 112 may include capacitive sensors. The capacitive sensor may be, for a specific example, a capacitive displacement sensor.

The capacitive sensor may sense a change in capacitance and measure the distance between the first measurement sensor 111 and the second measurement sensor 112, which are capacitive sensors, and the rotating shaft 31 of the roller 30, thereby extracting a gap value between the pair of rollers 30. For example, when an alternating current of a certain frequency flows toward a conductive measurement target in the capacitive sensor, the amplitude of the alternating current voltage is proportional to the distance from the measurement target, and thus the distance between the capacitive sensor and the measurement target may be measured.

Meanwhile, the roller gap measuring device 100 according to an embodiment of the present disclosure may further include a calculation unit (not shown). At this time, the first measurement sensor 111 and the second measurement sensor 112 include capacitive sensors, which may measure the distance between the first measurement sensor 111 and the second measurement sensor 112 and the rotating shaft 31 of the roller 30 and transmit the measured measurement gap value to the calculation unit. Here, the calculation unit may extract the gap value between the pair of rollers 30 through the received measurement gap value. And, connection lines between the first measurement sensor 111 and the second measurement sensor 112 and the calculation unit are omitted in the drawing, but for example, they may be connected in various forms of wired connection lines or wireless connection forms, or may be mounted on or included in the first measurement sensor 111 and the second measurement sensor 112.

Meanwhile, the calculation unit may extract the gap value between a pair of rollers 30 by receiving the measured gap value of the first rotating shaft 11 of the first roller 10 and the measured gap value of the second rotating shaft 21 of the second roller 20 measured by the first measurement sensor 111 and the second measurement sensor 112 respectively positioned inside the first bearing housing 42 and the second bearing housing 52.

Here, the calculation unit may extract the amount of change by subtracting the initial measured gap values for the first rotating shaft 11 of the first roller 10 and the second rotating shaft 21 of the second roller 20 stored in the memory from the average value of the sum of the measured gap values for the first rotating shaft 11 of the first roller 10 and the measured gap values for the second rotating shaft 21 of the second roller 20, and may extract the actual gap value between the first roller 10 and the second roller 20 by adding the amount of change to the initial gap value between the first roller 10 and the second roller 20 stored in the memory (not shown). Here, since the amount of change in the rotating shaft 31 may be estimated to be equal to the amount of change between the first roller 10 and the second roller 20, the gap between the first roller 10 and the second roller 20 may be extracted by measuring the amount of change in the rotating shaft 31. At this time, the memory may be included in the calculation unit or may be included in a device outside the calculation unit to be electrically connected to the calculation unit.

That is, when the calculation unit defines that the measurement gap value for the first rotating shaft 11 of the first roller 10 after the device process or after the distance adjustment of a pair of rollers 30 is (a), the measurement gap value for the second rotating shaft 21 of the second roller 20 is (b), the initial measurement gap value, which is the average of the sum of the initial measurement gap value for the first rotating shaft 11 of the first roller 10 before the device process stored in the memory and the measurement gap value for the second rotating shaft 21 of the second roller 20, is T, the amount of gap change between the first roller 10 and the second roller 20 is E, and the gap value of the first roller 10 and the second roller 20 measured after the device process is (g), the following conditional equation 1 is satisfied:

$$(a+b)/2 - T = E \quad \text{Conditional Equation 1}$$

And, when the amount of gap change between the first roller 10 and the second roller 20 is E, the initial gap value between the first roller 10 and the second roller 20 before the device process stored in the memory is Z, and the gap value of the first roller 10 and the second roller 20 measured after the device process is (g), the following conditional equation 2 is satisfied:

$$E + Z = g \quad \text{Conditional Equation 2}$$

Here, for a specific example, when the measured gap value (a) for the first rotating shaft 11 of the first roller 10 is +11 um, the measured gap value (b) for the second rotating shaft 21 of the second roller 20 is +11 um, and the initial measurement gap value T, which is an average of the sum of the initial measurement gap value for the first rotating shaft 11 of the first roller 10 and the measurement gap value for the second rotating shaft 21 of the second roller 20 before the device process stored in the memory, is 1 um, the amount of gap change E between the first roller 10 and the second roller 20 may be obtained as (11 um + 11 um)/2 - 1 um = 10 um through the above conditional equation 1. And, when the initial gap value Z between the first roller 10 and the second roller 20 before the device process stored in the memory is 100 um, the gap value (g) of the first roller 10 and the second roller 20 measured after the device process may be obtained as 10 um + 100 um = 110 um through the above conditional equation 2.

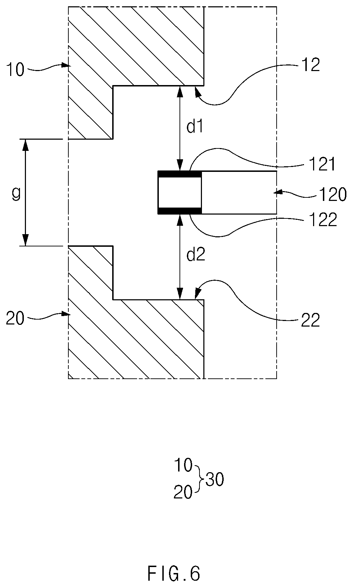

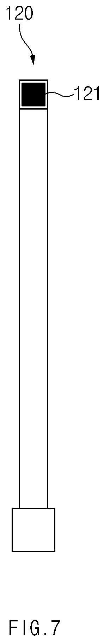

FIG. 6 is an enlarged cross-sectional view of area B in FIG. 2, and FIG. 7 is a plan view showing a roller distance measurement sensor unit in a roller gap measuring device according to an embodiment of the present disclosure.

Referring to FIGS. 2, 6, and 7, the roller distance measurement sensor unit 120 may be positioned between ends of the pair of rollers 30 and measure the gap (g) between the pair of rollers 30.

The ends of the pair of rollers 30 may form steps 12, 22 whose diameters decrease. At this time, the steps 12, 22 may be formed at the ends of the bodies of the pair of rollers 30. Here, the bodies of the pair of rollers 30 may be parts excluding the rotating shaft 31.

The end of the roller distance measurement sensor unit 120 may be positioned between the steps 12, 22 of the pair of rollers 30, and the gap (g) of the pair of rollers 30 may be measured by measuring the gap between the steps 12, 22 of the pair of rollers 30.

At the end of the roller distance measurement sensor unit 120, sensing portions 121, 122 that sense the distances d1, d2 to the steps 12, 22 of the pair of rollers 30 may be respectively positioned on both sides thereof facing the steps 12, 22 of the pair of rollers 30.

The sensing portions 121, 122 may include capacitive sensors. The capacitive sensor may be, for a specific example, a capacitive displacement sensor.

At this time, the sensing portions 121, 122 may include capacitive sensors, which may measure the distances d1, d2 to the measured steps 12, 22 of the pair of rollers 30 and transmit the measured measurement gap value to the calculation unit. And, the calculation unit may be connected to a control unit that controls the driving of the pair of rollers 30, for example.

Meanwhile, for example, the steps 12, 22 may be processed on both sides of the longitudinal direction of the pair of rollers 30 to a depth of, for example, 500 um. That is, the distance from the step 12 of the first roller 10 to the step 22 of the second roller 20 may be, for example, 1000 um, but the present disclosure is not limited thereto. Here, if the thickness of the end of the roller distance measurement sensor unit 120 where the sensing portions 121, 122 are positioned is 900 um, and the initial gap value between the first roller 10 and the second roller 20 before the device process stored in the memory is 0 um, the distance from the roller distance measurement sensor unit 120 measured by the sensing portions 121, 122 respectively positioned on both sides of the end of the roller distance measurement sensor unit 120 to the steps 12, 22 of the pair of rollers 30 may be measured as 100 um. And, the measured distance of 100 um to the steps 12, 22 of the pair of rollers 30 may be stored in the memory as an initial value.

Thereafter, if the gap between the first roller 10 and the second roller changes after the process or after adjusting the roller distance, so that the actual gap becomes 100 um, the distance from the roller distance measurement sensor unit 120 to the steps 12, 22 of the pair of rollers 30 is measured as 200 um. Therefore, the calculation unit may estimate the gap between the first roller 10 and the second roller 20 as 100 um by subtracting the initial value of 100 um stored in the memory from 200 um, which is the distance from the roller distance measurement sensor unit 120 to the steps 12, 22 of the pair of rollers 30.

Referring to FIG. 2, the roller gap measuring device 100 according to an embodiment of the present disclosure configured as described above may accurately measure the actual gap or a gap value close to the actual gap occurring between the pair of rollers 30 during the process by positioning the gap measurement sensor unit 110 in the bearing housing 62 of the bearing unit 60 on which the rotating shaft 31 of the pair of rollers 30 is mounted and measuring the distance between the rotating shaft 31 and the gap measurement sensor unit 110. Accordingly, by detecting the gap (g) between the pair of rollers 30 widened due to bearing clearance during the process close to the actual gap, it is possible to calculate the insufficient pressing amount, and there is an effect of enabling feedback control to allow additional pressing to be made up for the corresponding widening. And, after the operator adjusts and resets the gap (g) between the pair of rollers 30, it may be easy to check whether the reset pair of rollers 30 are properly positioned in the bearing unit 60 or whether there is an abnormality in the coupling state through the gap measurement sensor unit 110.

Additionally, by further positioning the roller distance measurement sensor unit 120 between the ends of the pair of rollers 30 and measuring the gap (g) between the pair of rollers 30, the gap value that is the actual gap or remarkably close to the actual gap widened during the process between the pair of rollers 30 may be measured significantly accurately.

The present disclosure has been hereinabove described in detail through specific embodiments, but this is intended to specifically describe the present disclosure, and the present disclosure is not limited thereto. It will be said that various modifications and variations are possible by those having ordinary skill in the art within the technical ideas of the present disclosure.

Additionally, the specific scope of protection of the present disclosure will be made clear by the appended claims of the patent.

[List of Reference Numerals]

10: First roller
11: First rotating shaft
12: Step
20: Second roller
21: Second rotating shaft
22: Step
30: Roller
31: Rotating shaft
40: First bearing unit
41: First bearing
42: First bearing housing
50: Second bearing unit
51: Second bearing
52: Second bearing housing
60: Bearing unit
61: Bearing
62: Bearing housing
100: Roller gap measuring device
110: Gap measurement sensor unit
111: First measurement sensor

112: Second measurement sensor
113: Sensor ring
113a: One side
113a-1: First receiving groove
113b: The other side
113b-2: Second receiving groove
120: Roller distance measurement sensor unit
121, 122: Sensing portion
d1, d2: Distance
g: Gap

**Claims**

1.  A roller gap measuring device for measuring a gap between a pair of rollers, the roller gap measuring device comprising:

    a gap measurement sensor unit that measures the gap between the pair of rollers,
    wherein the pair of rollers each comprises a rotating shaft extending in one direction; and a bearing unit mounted on the rotating shaft,
    wherein the bearing unit comprises a bearing mounted on an outer surface of the rotating shaft; and a bearing housing accommodating the bearing,
    wherein the gap measurement sensor unit is positioned in the bearing housing and measures a distance between the rotating shaft and the gap measurement sensor unit to measure the gap between the pair of rollers.

2.  The roller gap measuring device according to claim 1,

    wherein the pair of rollers comprises a first roller and a second roller,
    wherein the first roller comprises a first rotating shaft extending in one direction; and a first bearing unit mounted on the first rotating shaft, and the second roller comprises a second rotating shaft extending in one direction; and a second bearing unit mounted on the second rotating shaft,
    wherein the first bearing unit comprises a first bearing mounted on an outer surface of the first rotating shaft; and a first bearing housing accommodating the first bearing, and the second bearing unit comprises a second bearing mounted on an outer surface of the second rotating shaft; and a second bearing housing accommodating the second bearing,
    wherein the gap measurement sensor unit is positioned inside the first bearing housing and the second bearing housing, respectively.

3.  The roller gap measuring device according to claim 2,

wherein the gap measurement sensor unit comprises a first measurement sensor and a second measurement sensor positioned on both sides of the inside of the bearing housing, and measures the gap between the pair of rollers by measuring the distance of the first measurement sensor and the second measurement sensor from the rotating shaft of the pair of rollers, respectively.

4. The roller gap measuring device according to claim 3,

wherein the gap measurement sensor unit further comprises a sensor ring on which the first measurement sensor and the second measurement sensor are positioned, and the sensor ring is positioned between the rotating shaft and the bearing housing.

5. The roller gap measuring device according to claim 4,
wherein the sensor ring is formed in a circular shape, and the first measurement sensor and the second measurement sensor are positioned on inner circumferential surfaces of both sides thereof.

6. The roller gap measuring device according to claim 5,

wherein in the sensor ring,
a first receiving groove in which the first measurement sensor is positioned and a second receiving groove in which the second measurement sensor is positioned are formed on the inner circumferential surface thereof, and the first receiving groove and the second receiving groove are open toward the rotating shaft.

7. The roller gap measuring device according to claim 6,
wherein the first measurement sensor and the second measurement sensor are spaced apart from the rotating shaft by a predetermined distance to measure the distance in a non-contact manner.

8. The roller gap measuring device according to claim 5,
wherein an outer circumferential surface of the sensor ring is attached to an inner circumferential surface of the bearing housing.

9. The roller gap measuring device according to claim 3,
wherein the first measurement sensor and the second measurement sensor are arranged in a direction parallel to the arrangement direction of the pair of rollers.

10. The roller gap measuring device according to any one of claims 3 to 9,
wherein the first measurement sensor and the second measurement sensor comprise capacitive sensors.

11. The roller gap measuring device according to claim 3, further comprising:
a calculation unit that extracts a gap value between the pair of rollers by receiving measured gap values obtained by respectively measuring the distance between the rotating shafts of the pair of rollers at the first measurement sensor and the second measurement sensor.

12. The roller gap measuring device according to claim 11,
wherein the calculation unit extracts an amount of change by subtracting initial measurement gap values for the first rotating shaft of the first roller and the second rotating shaft of the second roller stored in a memory from an average value of the sum of a measured gap value for the first rotating shaft of the first roller and a measured gap value for the second rotating shaft of the second roller, and adds the amount of change to an initial gap value between the first roller and the second roller stored in the memory, to extract a gap value between the first roller and the second roller.

13. The roller gap measuring device according to claim 1, further comprising:
a roller distance measurement sensor unit that is positioned between ends of the pair of rollers and measures the gap between the pair of rollers.

14. The roller gap measuring device according to claim 13,

wherein the ends of the pair of rollers form steps whose diameters decrease, and an end of the roller distance measurement sensor unit is positioned between the steps of the pair of rollers, and the gap of the pair of rollers is measured by measuring a distance between the steps of the pair of rollers.

15. The roller gap measuring device according to claim 14,

wherein at the end of the roller distance measurement sensor unit,
sensing portions that sense the distances to the steps of the pair of rollers are respectively positioned on both sides thereof facing the steps of the pair of rollers.

16. The roller gap measuring device according to claim 15,
wherein the sensing portions comprise capacitive sensors.

FIG.1

FIG.2

30

113a

111

60

62

61

31

113b

112

A

111
112  }110
113

113a }113
113b

FIG.3

111

113a

113a-1

62

61

31

113b-1

113b

61

62

112

111
112 } 110
113

113a
113b } 113

FIG.4

110

113a

111

113b

$\left.\begin{array}{l}113a \\ 113b\end{array}\right\}113$

FIG.5

EP 4 763 505 A1

FIG.6

14

120

121

FIG.7

## INTERNATIONAL SEARCH REPORT

| | International application No. |
|---|---|
| | **PCT/KR2025/004447** |

### A. CLASSIFICATION OF SUBJECT MATTER

**B30B 15/26**(2006.01)i; **B30B 3/04**(2006.01)i; **B30B 11/20**(2006.01)i; **B21B 38/10**(2006.01)i; **H01M 4/04**(2006.01)i

According to International Patent Classification (IPC) or to both national classification and IPC

### B. FIELDS SEARCHED

Minimum documentation searched (classification system followed by classification symbols)

B30B 15/26(2006.01); B21C 51/00(2006.01); B29C 48/885(2019.01); B30B 15/30(2006.01); B65H 5/06(2006.01); F16C 19/52(2006.01); F16C 32/00(2006.01); F16C 41/00(2006.01); G01B 7/00(2006.01); H01M 50/403(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극시트(electrode sheet), 롤러(roller), 갭(gap), 측정(measurement), 및 베어링(bearing)

### C. DOCUMENTS CONSIDERED TO BE RELEVANT

| Category* | Citation of document, with indication, where appropriate, of the relevant passages | Relevant to claim No. |
|---|---|---|
| Y | CN 219903282 U (SINOMA LITHIUM BATTERY SEPARATOR (INNER MONGOLIA) CO., LTD.) 27 October 2023 (2023-10-27) See paragraphs [0001] and [0030]-[0035] and figures 1-4. | 1,2,13-16 |
| A | | 3-12 |
| Y | JP 2023-159057 A (PRIMETALS TECHNOLOGIES AUSTRIA GMBH) 31 October 2023 (2023-10-31) See paragraphs [0001], [0013], [0036] and [0043] and figures 1-3. | 1,2,13-16 |
| Y | JP 06-106240 A (ISHIKAWAJIMA HARIMA HEAVY INDUSTRIES CO., LTD.) 19 April 1994 (1994-04-19) See paragraphs [0007] and [0019]-[0021] and figures 1 and 8-10. | 13-16 |
| A | US 2011-0116733 A1 (SIRAKY, Josef et al.) 19 May 2011 (2011-05-19) See paragraphs [0001] and [0039]-[0041] and figures 1-2. | 1-16 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 July 2025** | **02 July 2025** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2025/004447** |

**C.    DOCUMENTS CONSIDERED TO BE RELEVANT**

| Category* | Citation of document, with indication, where appropriate, of the relevant passages | Relevant to claim No. |
|---|---|---|
| A | JP 2024-503783 A (BRUDERER AKTIENGESELLSCHAFT) 29 January 2024 (2024-01-29) See paragraphs [0059]-[0094] and figures 1-7. | 1-16 |

Form PCT/ISA/210 (second sheet) (July 2022)

EP 4 763 505 A1

## INTERNATIONAL SEARCH REPORT
### Information on patent family members

International application No.

**PCT/KR2025/004447**

| Patent document cited in search report | | | Publication date (day/month/year) | Patent family member(s) | | | Publication date (day/month/year) |
|---|---|---|---|---|---|---|---|
| CN | 219903282 | U | 27 October 2023 | None | | | |
| JP | 2023-159057 | A | 31 October 2023 | BR | 112021010099 | A2 | 24 August 2021 |
| | | | | CN | 113165035 | A | 23 July 2021 |
| | | | | CN | 113165035 | B | 05 December 2023 |
| | | | | EP | 3663011 | A1 | 10 June 2020 |
| | | | | EP | 3890899 | A1 | 13 October 2021 |
| | | | | EP | 3890899 | B1 | 26 October 2022 |
| | | | | ES | 2936219 | T3 | 15 March 2023 |
| | | | | JP | 2022-510461 | A | 26 January 2022 |
| | | | | JP | 7378476 | B2 | 13 November 2023 |
| | | | | KR | 10-2021-0098462 | A | 10 August 2021 |
| | | | | SI | 3890899 | T1 | 28 February 2023 |
| | | | | TW | 202033288 | A | 16 September 2020 |
| | | | | TW | I837234 | B | 01 April 2024 |
| | | | | US | 11346395 | B2 | 31 May 2022 |
| | | | | US | 2021-0362205 | A1 | 25 November 2021 |
| | | | | WO | 2020-115054 | A1 | 11 June 2020 |
| JP | 06-106240 | A | 19 April 1994 | None | | | |
| US | 2011-0116733 | A1 | 19 May 2011 | CN | 102252029 | A | 23 November 2011 |
| | | | | DE | 102009044542 | B3 | 19 May 2011 |
| | | | | EP | 2325654 | A1 | 25 May 2011 |
| | | | | JP | 2011-107134 | A | 02 June 2011 |
| | | | | US | 8461827 | B2 | 11 June 2013 |
| JP | 2024-503783 | A | 29 January 2024 | EP | 4237788 | A1 | 06 September 2023 |
| | | | | EP | 4237788 | B1 | 09 October 2024 |
| | | | | ES | 2991412 | T3 | 03 December 2024 |
| | | | | JP | 7675822 | B2 | 13 May 2025 |
| | | | | PL | 4237788 | T3 | 31 March 2025 |
| | | | | US | 2024-0033806 | A1 | 01 February 2024 |
| | | | | WO | 2022-128073 | A1 | 23 June 2022 |

Form PCT/ISA/210 (patent family annex) (July 2022)

**REFERENCES CITED IN THE DESCRIPTION**

**Patent documents cited in the description**

- KR 1020240046633